(19) **Europäisches Patentamt**

**European Patent Office**

**Office européen des brevets**

(11) **EP 0 773 458 B1**

(12) **EUROPÄISCHE PATENTSCHRIFT**

(45) Veröffentlichungstag und Bekanntmachung des Hinweises auf die Patenterteilung:
**08.03.2000 Patentblatt 2000/10**

(51) Int Cl.⁷: **G02B 5/18**

(21) Anmeldenummer: **95117778.1**

(22) Anmeldetag: **11.11.1995**

(54) **Auflicht-Phasengitter**

Incident light phase grating

Grille de phase à lumière incidente

(84) Benannte Vertragsstaaten:
**AT CH DE FR GB IT LI**

(43) Veröffentlichungstag der Anmeldung:
**14.05.1997 Patentblatt 1997/20**

(73) Patentinhaber: **Dr. Johannes Heidenhain GmbH
83292 Traunreut (DE)**

(72) Erfinder:
• **Franz, Andreas, Dr.
D-83308 Trostberg (DE)**
• **Spanner, Erwin
D-83278 Traunstein (DE)**

(56) Entgegenhaltungen:
**EP-A- 0 160 784** **EP-A- 0 387 520**

• **OPTICS LETTERS, Bd. 20, Nr. 8, 15.April 1995 WASHINGTON US, Seiten 940-942, M.D.PERRY ET AL. 'HIGH-EFFICIENCY MULTILAYER DIELECTRIC DIFFRACTION GRATINGS'**

## Beschreibung

Die vorliegende Erfindung betrifft ein Auflicht-Phasengitter, über das die auf mehrere Reflexionsschichten auftreffenden Lichtbündel nach erfolgter Reflexion in definierter Art und Weise in ihrer relativen Phasenlage zueinander verschoben werden. Insbesondere geeignet ist ein derartiges Auflicht-Phasengitter etwa für den Einsatz in einer lichtelektrischen Positionsmeßeinrichtung, mit der die Relativlage zweier zueinander beweglicher Objekte definiert bestimmbar ist.

Es ist bekannt, daß Phasengitter gegenüber Amplitudengittern den Vorteil einer höheren Beugungseffizienz aufweisen. So kann man mit Hilfe von Phasengittern im Strahlengang entsprechender optischer Systeme einen deutlich höheren Relativanteil der Intensität einfallender Teilstrahlenbündel definiert in bestimmte Raumrichtungen beugen als dies etwa mit vergleichbaren Amplitudengittern möglich ist. Übliche Phasengitter weisen hierzu an der den einfallenden Teilstrahlenbündeln entgegengerichteten Seite ein Stufengitter auf. Die stufenartig strukturierte Oberfläche hat jedoch wiederum Nachteile zur Folge, wenn z.B. Verunreinigungen in den Stufen-Vertiefungen vorhanden sind und dort den Brechungsindex undefiniert verändern. Zudem läßt sich eine derart strukturierte Oberfläche nur mit erhöhtem verfahrenstechnischen Aufwand herstellen.

Zur Lösung dieser Problematik wird deshalb in der EP 0 160 784 vorgeschlagen, zwei beabstandete, nahezu planare Reflexionsschichten vorzusehen, die zu beiden Seiten einer transparenten Abstandsschicht angeordnet sind. Von den beiden Reflexionsschichten ist mindestens eine als Amplitudengitter ausgebildet. In einer möglichen Ausführungsform ist die untere der beiden Reflexionsschichten als durchgehende Spiegelschicht, üblicherweise als Metallschicht ausgebildet. Um nunmehr in Reflexion hohe Beugungseffizienzen zu erzielen, sollte insbesondere das Reflexionsvermögen der unteren, durchgehenden Spiegelschicht möglichst hoch ausgelegt sein. Als geeignete Materialien für die Spiegelschicht kommen beispielsweise Gold, Silber, Kupfer oder aber Aluminium in Frage. Als nachteilig bei diesen Materialien erweist sich jedoch, daß sie relativ weich sind, was wiederum eine mangelnde Haftung der darüber angeordneten Schichten bedingt. Wählt man hingegen härtere Schichten als Material für die durchgehende, untere Spiegelschicht, wie etwa Chrom oder Titannitrid, die einen zuverlässigen Schichtaufbau, respektive eine gute Haftung gewährleisten, so nimmt man ein relativ geringes Reflexionsvermögen in Kauf. Die Beugungseffizienz ist demzufolge nicht ausreichend.

Aus der Veröffentlichung "High-efficiency multilayer dielectric diffraction gratings" von M.D. Perry et al. in Optics Letters, Vol. 20, No. 8, April 15, 1995, Seite 940-942 sind ferner Auflicht-Phasengitter bekannt, in denen eine reflektierende Schicht aus einem Stapel mit mehreren dielektrischen Teilschichten aufgebaut ist.

Die alternierend angeordneten Schichten mit hohem und niedrigem Brechungsindex wirken dabei in bekannter Art und Weise als dielektrische Spiegelschicht. Dem einfallenden Lichtbündel zugewandt ist eine strukturierte Gitteroberfläche vorgesehen. Zwar erreicht man mit einer derartigen Anordnung relativ hohe Beugungseffizienzen und einen zuverlässigen, harten Schichtaufbau, jedoch bereitet die erforderliche Strukturierung der Oberfläche den gleichen verfahrenstechnischen Aufwand, der bereits eingangs erwähnt wurde.

Aufgabe der vorliegenden Erfindung ist es daher, ein Auflicht-Phasengitter zu schaffen, das die erwähnten Nachteile des Standes der Technik vermeidet und insbesondere eine einfache Fertigung ermöglicht sowie eine hohe Beugungseffizienz sicherstellt.

Diese Aufgabe wird gelöst durch ein Auflicht-Phasengitter mit den Merkmalen des Anspruches 1.

Vorteilhafte Weiterbildungen des erfindungsgemäßen Auflicht-Phasengitters ergeben sich aus den Maßnahmen der abhängigen Ansprüche.

Die erfindungsgemäße Ausgestaltung eines Auflicht-Phasengitters gewährleistet nunmehr zum einen den gewünschten hohen Reflexionsgrad der unteren Schicht inclusive einer guten Haftumg der darüber angeordneten Schichten. Zum anderen ist gleichzeitig sichergestellt, daß die üblicherweise resultierenden Probleme an der obersten Schicht im Zusammenhang mit der Strukturierung minimiert werden. So ist hierbei keine aufwendige, Tiefenstrukturierung der Oberfläche erforderlich, vielmehr können nahezu planare Strukturen gefertigt werden, was verfahrenstechnisch deutlich weniger aufwendig ist. Hierfür können etwa bekannte Maskentechnologien eingesetzt werden.

Weitere Vorteile sowie Einzelheiten des erfindungsgemäßen Auflicht-Phasengitters ergeben sich aus der nachfolgenden Beschreibung eines Ausführungsbeispieles anhand der beiliegenden Figur.

Diese zeigt eine schematische Darstellung eines Ausführungsbeispieles des erfindungsgemäßen Auflicht-Phasengitters in einer Schnitt-Darstellung.

Bei der in der Figur dargestellten Ausführungsform des erfindungsgemäßen Auflicht-Phasengitters ist ausgehend von einem Substrat (1) eine bestimmte Anordnung der darüber vorgesehenen Schichten vorgegeben. Das Substratmaterial (1) ist so gewählt, daß es eine möglichst große Stabilität sowohl gegenüber mechanischen als auch thermischen Belastungen aufweist. Insbesondere eignet sich hierzu etwa Zerodur, dessen thermischer Ausdehnungskoeffizient nahezu Null ist. Als alternative Substratmaterialien kommen aber auch Quarzglas, andere optische Gläser, Stahl, wie etwa Invar sowie Keramik oder Silizium in Betracht. Die Stabilität im Hinblick auf mögliche temperaturbedingte Volumen- oder Längenänderungen ist vor allem beim Einsatz des erfindungsgemäßen Auflicht-Phasengitters in Meßsystemen zur hochpräzisen Erfassung der Relativlage zweier Objekte von Bedeutung.

Über dem Substrat (1) sind zwei unterschiedliche Schichten (I, II) vorgesehen, die voneinander beabstandet angeordnet sind. Beide Schichten (I, II) wirken zumindest für einen Teil des darauf auftreffenden Lichtes reflektierend. Die oberste, dem einfallenden Licht zugewandte Schicht (I) sei hierbei im folgenden als erste Schicht bezeichnet, während die dem Substrat (1) zugewandte Schicht (II) als zweite Schicht (II) bezeichnet wird. Zwischen den beiden Schichten (I, II) ist eine Abstandsschicht (2) vorgesehen, die im wesentlichen transparent für die einfallende Strahlung ist.

Die obere, erste Schicht (I) ist als Amplitudengitter ausgeführt, das periodisch abwechselnde Bereiche unterschiedlicher Transmission und Reflexion aufweist, im folgenden als Striche und Lücken bezeichnet. Im dargestellten Ausführungsbeispiel sind die Bereiche hoher Reflexion (3.1, 3.2, 3.3, 3.4) als nahezu planare, strichförmige Bereiche eines Materials mit hohem Reflexionsvermögen ausgeführt. Als geeignetes Material hierfür kommt beispielsweise Chrom in Betracht, das in einer Dicke von 30-50 nm aufgebracht wird. Die typische Strichbreite beträgt ca. die Hälfte der gewählten Gitterperiode. Alternativ kommen beispielsweise auch Gold oder Titannitrid innerhalb dieser Schicht (I) als Material der reflektierenden Bereiche (3.1, 3.2, 3.3, 3.4) in Frage.

Zwischen den Bereichen hoher Reflexion (3.1, 3.2, 3.3, 3.4) sind diejenigen Bereiche (4.1, 4.2, 4.3, 4.4) der ersten Schicht (I) angeordnet, durch die die einfallenden Lichtbündel in Richtung der zweiten Schicht (II) durchgelassen werden, d.h. im dargestellten Ausführungsbeispiel demzufolge eine vollkommene Transmission ermöglichen.

Verfahrenstechnisch läßt sich die erste Schicht (I) relativ problemlos über bekannte Photolithographie-Methoden herstellen bzw. strukturieren. Derartige photolithographische Verfahren zur Gitterstrukturierung sind z.B. aus der bereits zitierten EP 0 160 784 hinlänglich bekannt.

Zwischen der Abstandschicht (2), auf die später noch näher eingegangen wird, und dem Substrat (1) ist die zweite Schicht (II) angeordnet, die primär eine Reflexion der durch die transparenten Bereiche (4.1, 4.2, 4.3, 4.4) bzw. Lücken der ersten Schicht (I) tretenden Lichtbündel bewirkt. Hierbei besteht die zweite Schicht (II) aus einer dielektrischen Spiegelschicht, die sich aus mehreren alternierend angeordneten Teilschichten (5, 6) mit hohem und niedrigem Brechungsindex zusammensetzt. Die Brechungsindizes für das Teilschichtmaterial mit hohem Brechungsindex liegen etwa zwischen 1,8 und 3,0. Für die Teilschichten (6) mit niedrigem Brechungsindex wird ein Material gewählt, dessen Brechungsindex typischerweise in einem Bereich zwischen 1,3 und 1,5 liegt.

Als geeignete Materialien für die Teilschicht (5) mit hohem Brechungsindex kommt z.B. $Ta_2O_5$ oder aber $TiO_2$ in Betracht. Für die Teilschicht (6) mit niedrigem Brechungsindex kann $SiO_2$ oder $MgF_2$ gewählt werden.

Im dargestellten Ausführungsbeispiel umfaßt das Schichtpaket der zweiten Schicht (II) insgesamt fünf Teilschichten (5) mit hohem Brechungsindex, während vier Teilschichten (6) mit niedrigem Brechungsindex vorgesehen sind. Generell liegt die Anzahl der Teilschicht-Paare für die zweite Schicht (II) des erfindungsgemäßen Auflicht-Phasengitters etwa zwischen 4 und 7. Ab etwa 5 vorgesehenen Teilschicht-Paaren ist ein relativ konstantes Reflexionsvermögen zu erwarten, d. h. auch eine erhöhte Anzahl von Teilschicht-Paaren bedeutet keine wesentliche Verbesserung hinsichtlich des Reflexionsvermögens der zweiten Schicht (II) mehr.

Um die gewünschte, optimale Reflexionswirkung der zweiten Schicht (II) zu erreichen, ist die Dicke der Teilschichten mit dem Brechungsindex n (5, 6) derart auf die einfallende Lichtwellenlänge λ abgestimmt, daß die Schichtdicke d für beispielsweise gewünschten senkrechten Einfall gemäß folgender Beziehung gewählt wird:

$$d = \lambda / 4n$$

Im Fall der Verwendung von Licht mit der Wellenlänge λ =670nm und einer $SiO_2$-Schicht (n=1,45) beträgt die Schichtdicke unter senkrechtem Einfall demzufolge d=116nm. Für den Fall eines nicht-senkrechten Einfalls geht in den Nenner der obigen Beziehung ein Korrekturfaktor $\cos\Theta_i$ ein, wobei $\Theta_i$ den Brechungswinkel zum Lot in der entsprechenden Schicht angibt. Aufgrund der oben erläuterten Dimensionierungsvorschrift ergeben sich natürlich unterschiedliche Schichtdicken für die Teilschichten (5, 6) mit verschiedenen Brechungsindizes, d.h. die Teilschichten (5) mit dem hohen Brechungsindex sind dünner als die Teilschichten (6) mit dem niedrigen Brechungsindex.

Wie bereits angedeutet, bewirkt die zweite Schicht (II) eine nahezu vollständige Reflexion der einfallenden Strahlung. Zudem erweist sich als vorteilhaft, daß die dielektrische Spiegelschicht (II) ausreichend hart ist, so daß eine gute Haftung auf dem angrenzenden Substrat (I) sowie mit der Abstandsschicht (2) gewährleistet ist. Es resultiert eine hinreichende mechanische Belastbarkeit des gesamten erfindungsgemäßen Auflicht-Phasengitters.

Die zwischen den beiden Schichten (I, II) angeordnete Abstandsschicht (2) ist in der dargestellten Ausführungsform ebenfalls aus dem Material gefertigt, aus dem die Teilschichten (6) mit dem niedrigerem Brechungsindex in der zweiten Schicht (II) bestehen. Durch die geeignete Wahl der Dicke $d_A$ der Abstandsschicht (2) läßt sich definiert die gewünschte resultierende Phasenverschiebung der von den verschiedenen Reflexionsebenen reflektierten Teilstrahlenbündel einstellen. Die Schichtdicke liegt bei Verwendung von $SiO_2$ für die Abstandsschicht (2) und Strahlung der Wellenlänge λ =670nm zwischen 0nm und 200nm. Im Sonderfall der Schichtdicke $d_A$=0 fungiert die oberste Schicht des dielektrischen Schichtstapels quasi als Abstandsschicht.

Die Optimierung der Schichtdicke $d_A$ im Hinblick auf die jeweiligen Anforderungen erfolgt jeweils über geeignete numerische Verfahren.

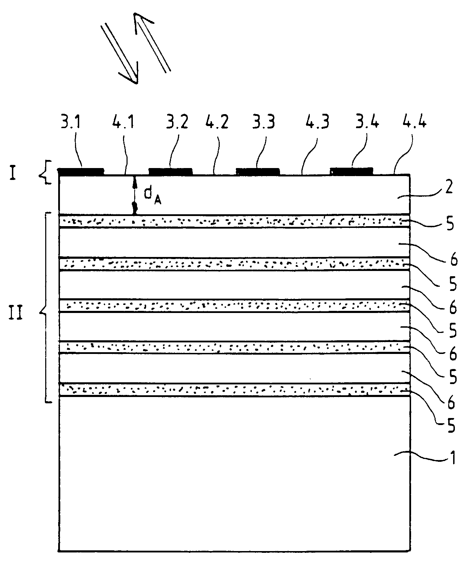

Als vorteilhaft erweist sich beim erfindungsgemäßen Auflicht-Phasengitter ferner, wenn die erste Schicht (I) mit einer Schutzschicht versehen wird und derart die mechanische Belastbarkeit verbessert wird. Als geeignetes Material für eine derartige Schutzschicht kommt z.B. $SiO_2$ in Betracht, das in einer Dicke von ca. 100nm aufgebracht wird. Das in Figur 1 dargestellte Ausführungsbeispiel weist im übrigen keine Schutzschicht auf.

Wie bereits oben angedeutet findet das erfindungsgemäße Auflicht-Phasengitter beispielsweise Verwendung in einer interferentiell arbeitenden Positionsmeßeinrichtung, wie sie beispielsweise aus der EP 0 387 520 bekannt ist. Hierbei kommt das Auflicht-Phasengitter vorzugsweise in einer sogenannten Littrow-Anordnung zum Einsatz, wie auch in der Figur durch die entsprechenden Pfeile angedeutet werden soll, d.h. der Beugungswinkel der -1. Beugungsordnung ist gleich dem Einfallswinkel des einfallenden Lichts.

Darüberhinaus sind jedoch auch andere Einsatzgebiete möglich, wo ebenfalls eine hohe mechanische Stabilität sowie eine möglichst einfache Fertigung gefragt sind.

## Patentansprüche

1. Auflicht-Phasengitter mit mindestens zwei durch eine durchgehende Abstandsschicht (2) getrennten Schichten (I, II), die mindestens einen Teil des auftreffenden Lichtes reflektieren, wobei eine erste, dem einfallenden Licht zugewandte Schicht (I) als Amplitudengitter mit periodisch abwechselnden Bereichen (3.1, 4.1, 3.2, 4.2, 3.3, 4.3, 3.4, 4.4) unterschiedlicher Transmission und Reflektivität ausgebildet ist, dadurch gekennzeichnet, daß die zweite Schicht (II) als dielektrische Spiegelschicht ausgebildet ist und aus mehreren übereinander liegenden alternierenden Teilschichten (5, 6) mit abwechselnd hohem und niedrigem Brechungsindex besteht.

2. Auflicht-Phasengitter nach Anspruch 1, wobei zwischen der ersten und zweiten Schicht (I, II) eine Abstandsschicht (2) vorgesehen ist, die aus dem Teilschicht-Material der zweiten Schicht (II) mit niedrigem Brechungsindex gebildet ist.

3. Auflicht-Phasengitter nach Anspruch 1, wobei die Schichten (2, 5, 6, I, II) auf einem Substrat (1) angeordnet sind.

4. Auflicht-Phasengitter nach Anspruch 3, wobei als Material für das Substrat (1) Zerodur gewählt ist.

5. Auflicht-Phasengitter nach Anspruch 3, wobei als Material für das Substrat (1) Quarzglas gewählt ist.

6. Auflicht-Phasengitter nach Anspruch 3, wobei als Material für das Substrat (1) Stahl gewählt ist.

7. Auflicht-Phasengitter nach Anspruch 1, wobei die reflektierenden Bereiche (3.1, 3.2, 3.3, 3.4) der ersten Schicht (I) aus Chrom gebildet sind.

8. Auflicht-Phasengitter nach Anspruch 1, wobei der Brechungsindex für die Teilschichten (5) mit dem höherem Brechungsindex im Bereich zwischen 1,8 und 3,0 liegt.

9. Auflicht-Phasengitter nach Anspruch 1, wobei der Brechungsindex für die Teilschichten (6) mit dem niederigeren Brechungsindex im Bereich zwischen 1,3 und 1,5 liegt.

10. Auflicht-Phasengitter nach Anspruch 1, wobei als Material für die Teilschichten (5) mit hohem Brechungsindex $Ta_2O_5$ gewählt ist.

11. Auflicht-Phasengitter nach Anspruch 1, wobei als Material für die Teilschichten (6) mit niedrigem Brechungsindex $SiO_2$ gewählt ist.

12. Auflicht-Phasengitter nach Anspruch 1, wobei zwischen 4 und 7 Schichtpaare innerhalb der zweiten Schicht (II) vorgesehen sind.

13. Auflicht-Phasengitter nach Anspruch 1, wobei für den Fall des nicht-senkrechten Einfalls von Strahlung mit der Wellenlänge $\lambda$ die einzelnen Teilschichten (5, 6) der zweiten Schicht (II) jeweils eine Dicke $d = \lambda/(4n * \cos\Theta_i)$ aufweisen und mit n der Brechungsindex der jeweiligen Schicht bezeichnet ist sowie $\Theta_i$ den Brechungswinkel zum Lot in der jeweiligen Teilschicht (5, 6) angibt.

14. Auflicht-Phasengitter nach Anspruch 13, wobei das Auflicht-Phasengitter in einer Littrow-Anordnung eingesetzt ist.

15. Auflicht-Phasengitter nach Anspruch 1, wobei über der ersten Schicht (I) eine Schutzschicht angeordnet ist.

16. Verwendung eines Auflicht-Phasengitters nach einem der vorangehenden Ansprüche in einer Positionsmeßeinrichtung.

## Claims

1. Incident light phase grating with at least two layers (I, II) which are separated by a continuous spacing layer (2) and reflect at least one portion of the impinging light, a first layer (I), facing the incident light, being designed as an amplitude grating with periodically alternating regions (3.1, 4.1, 3.2, 4.2, 3.3, 4.3, 3.4, 4.4) of different transmission and reflectivity, characterised in that the second layer (II) is designed as a dielectric reflective layer and comprises several superimposed, alternating part layers (5, 6) with an alternating high and low refractive index.

2. Incident light phase grating according to claim 1 in which a spacing layer (2) is provided between the first and the second layer (I, II), said spacing layer being formed from the part layer material of the second layer (II) with a low refractive index.

3. Incident light phase grating according to claim 1 in which the layers (2, 5, 6, I, II) are arranged on a substrate (1).

4. Incident light phase grating according to claim 3 in which Zerodur is chosen as the material for the substrate (1).

5. Incident light phase grating according to claim 3 in which quartz glass is chosen as the material for the substrate (1).

6. Incident light phase grating according to claim 3 in which steel is chosen as the material for the substrate (1).

7. Incident light phase grating according to claim 1 in which the reflective regions (3.1, 3.2, 3.3, 3.4) of the first layer (I) are formed from chrome.

8. Incident light phase grating according to claim 1 in which the refractive index for the part layers (5) with the higher refractive index lies in the range between 1.8 and 3.0.

9. Incident light phase grating according to claim 1 in which the refractive index for the part layers (6) with the lower refractive index lies in the range between 1.3 and 1.5.

10. Incident light phase grating according to claim 1 in which $Ta_2O_5$ is chosen as the material for the part layers (5) with a high refractive index.

11. Incident light phase grating according to claim 1 in which $SiO_2$ is chosen as the material for the part layers (6) with a low refractive index.

12. Incident light phase grating according to claim 1 in which there are provided between 4 and 7 pairs of layers within the second layer (II).

13. Incident light phase grating according to claim 1 in which the individual part layers (5, 6) of the second layer (II) respectively have a thickness d = $\lambda/(4n * \cos\theta_1)$ in the case of a non-perpendicular incidence of radiation with the wavelength $\lambda$ and the refractive index of the respective layer is designated by n and also $\theta_1$ indicates the refractive angle to the perpendicular in the respective part layer (5, 6).

14. Incident light phase grating according to claim 13 in which the incident light phase grating is inserted in a Littrow arrangement.

15. Incident light phase grating according to claim 1 in which a protective layer is arranged over the first layer (1).

16. Usage of an incident light phase grating according to one of the previous claims in a position measuring device.

**Revendications**

1. Réseau de phase à lumière incidente comprenant au moins deux couches (I, II) séparées par une couche intercalaire (2) continue, qui réfléchissent au moins une partie de la lumière incidente, une première couche (I) tournée vers la lumière incidente étant conformée en réseau d'amplitude avec des zones à transmission et à réflexion différentes (3.1, 4.1, 3.2, 4.2, 3.3, 4.3, 3.4, 4.4) qui alternent périodiquement, caractérisé par le fait que la deuxième couche (II) est conformée en couche miroir diélectrique et est constituée de plusieurs couches élémentaires (5, 6) empilées en alternance, qui présentent alternativement un indice de réfraction élevé et un indice de réfraction faible.

2. Réseau de phase à lumière incidente selon la revendication 1, dans lequel une couche intercalaire (2) qui est constituée du même matériau que le matériau de couche élémentaire de la deuxième couche (II) à faible indice de réfraction est prévue entre la première et la deuxième couche (I, II).

3. Réseau de phase à lumière incidente selon la revendication 1, dans lequel les couches (2, 5, 6, I, II) sont disposées sur un substrat.

4. Réseau de phase à lumière incidente selon la revendication 3, dans lequel du Zerodur est utilisé comme matériau pour le substrat (1).

5. Réseau de phase à lumière incidente selon la revendication 3, dans lequel du verre quartzeux est utilisé comme matériau pour le substrat (1).

**6.** Réseau de phase à lumière incidente selon la revendication 3, dans lequel de l'acier est utilisé comme matériau pour le substrat (1).

**7.** Réseau de phase à lumière incidente selon la revendication 1, dans lequel les zones réfléchissantes (3.1, 3.2, 3.3, 3.4) de la première couche (I) sont constituées de chrome.

**8.** Réseau de phase à lumière incidente selon la revendication 1, dans lequel l'indice de réfraction pour les couches élémentaires (5) à indice de réfraction élevé est situé dans la plage comprise entre 1,8 et 3,0.

**9.** Réseau de phase à lumière incidente selon la revendication 1, dans lequel l'indice de réfraction pour les couches élémentaires (6) à faible indice de réfraction est situé dans la plage comprise entre 1,3 et 1,5.

**10.** Réseau de phase à lumière incidente selon la revendication 1, dans lequel du $Ta_2O_5$ dans lequel utilisé comme matériau pour les couches élémentaires (5) à indice de réfraction élevé.

**11.** Réseau de phase à lumière incidente selon la revendication 1, dans lequel du $SiO_2$ est utilisé comme matériau pour les couches élémentaires (5) à faible indice de réfraction.

**12.** Réseau de phase à lumière incidente selon la revendication 1, dans lequel entre 4 et 7 couples de couches sont prévus à l'intérieur de la deuxième couche (II).

**13.** Réseau de phase à lumière incidente selon la revendication 1, dans lequel, pour une incidence non verticale de rayons de longueurs d'onde $\lambda$, les différentes couches élémentaires (5, 6) de la deuxième couche (II) présentent chacune une épaisseur $d = \lambda/(4n * \cos\Theta_1)$, n représentant l'indice de réfraction de la couche concernée et $\Theta_1$ désignant l'angle de réfraction par rapport à la verticale dans la couche élémentaire (5, 6) concernée.

**14.** Réseau de phase à lumière incidente selon la revendication 13, dans lequel le réseau de phase à lumière incidente est utilisé dans un dispositif de Littrow.

**15.** Réseau de phase à lumière incidente selon la revendication 1, dans lequel une couche de protection est disposée au dessus de la première couche (I).

**16.** Utilisation d'un réseau de phase à lumière incidente selon une des revendications précédentes dans un dispositif de mesure de position.